(19) **Europäisches Patentamt / European Patent Office / Office européen des brevets**

(11) **EP 4 415 552 B1**

(12) **EUROPEAN PATENT SPECIFICATION**

(45) Date of publication and mention
of the grant of the patent:
**18.06.2025 Bulletin 2025/25**

(21) Application number: **22789198.3**

(22) Date of filing: **14.09.2022**

(51) International Patent Classification (IPC):
*A23G 9/28* *(2006.01)*    *A23G 9/32* *(2006.01)*
*A23G 9/34* *(2006.01)*    *B65D 75/26* *(2006.01)*
*B65D 75/52* *(2006.01)*    *B65D 75/58* *(2006.01)*
*B65D 85/78* *(2006.01)*

(52) Cooperative Patent Classification (CPC):
**A23G 9/28; A23G 9/32; A23G 9/34; B65D 75/58;
B65D 75/5894;** B65D 85/78

(86) International application number:
**PCT/EP2022/075558**

(87) International publication number:
**WO 2023/061692 (20.04.2023 Gazette 2023/16)**

(54) **PACKAGED FROZEN CONFECTION**

VERPACKTES GEFRORENES KONFEKT

RÉCIPIENT DESTINÉ À UNE CONFISERIE GLACÉE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **12.10.2021  EP 21202272**

(43) Date of publication of application:
**21.08.2024  Bulletin 2024/34**

(73) Proprietor: **Unilever IP Holdings B.V.
3013 AL Rotterdam (NL)**

(72) Inventors:
• **JOUSSE, Fabien, Frédéric, Raymond, Marie
6708 WH Wageningen (NL)**
• **SHERWOOD, Paul, Leonard
6708 WH Wageningen (NL)**

(74) Representative: **Fijnvandraat, Arnoldus
Unilever Patent Group
Bronland 14
6708 WH Wageningen (NL)**

(56) References cited:
**EP-A1- 1 454 535    WO-A1-2021/190982
CA-A1- 2 457 487    US-A- 4 452 823**

## Description

### Field of the invention

The present invention relates to a packaged frozen confection, such as ice cream. In particular, it relates to frozen confection packaged in a flexible pouch.

### Background of the invention

In recent years, systems for dispensing frozen confections (such as ice cream) have been developed. For example, pre-packaged ice cream has been provided in containers that can be squeezed by hand to extrude the frozen confection. In particular, pouch-based systems have been developed.

WO 2018/224328 A1 discloses a packaged frozen confection comprising a flexible pouch. In order to allow for more controlled dispensing, the product outlet is preferably in the form of a spout. Such a pouch with a spout is inevitably constructed from multiple materials, which makes it extremely difficult to recycle. Although WO 2018/224328 A1 also mentions the possibility of the outlet being a simple orifice, the frozen confection extruded from such an outlet has been found to be unattractive to consumers due to its shape.

There remains a need for improvements in the pouch-based system for dispensing frozen confections. In particular, a simplified structure would allow for a reduction in the number of materials used to make the pouch, making it easier to recycle. However, this needs to be achieved without compromising the consumer experience.

### Summary of the invention

The present invention is defined by the claims.

The present invention discloses a pouch (1) containing frozen confection (10), wherein the pouch comprises:

- a wall (2) delimiting a cavity (9) containing the frozen confection and extending in a longitudinal direction from a base end (3) to a top end (4) of the pouch, wherein the base end comprises a gusset (12) extending in a transverse direction, and the top end comprises a top edge (7) extending in the transverse direction; and
- a product outlet (11) through which the frozen confection can be extruded from the cavity (9), the product outlet being an aperture in the top end of the wall, wherein the wall is deformable such that deformation of the wall urges the frozen confection towards the outlet enabling at least a portion of the frozen confection to be extruded through the outlet; and

   wherein the product outlet is an aperture that is shaped so as to be capable of forming the extruded frozen confection into a fluted shape, wherein the product outlet is a star-shaped aperture or an aperture having intersecting slits radiating from the centre thereof, and
   wherein the pouch does not comprise a spout.

### Detailed description of the invention

The present invention relates to a pouch containing frozen confection. The pouch comprises a wall extending in a longitudinal direction from a base end to a top end of the pouch. The wall delimits a cavity containing the frozen confection.

The base end comprises a gusset extending in a transverse direction. The top end of the pouch comprises a top edge extending in the transverse direction. It has been found that this configuration means that consumers are disposed to grip and squeeze the pouch at the gusseted base end, meaning that the dispensing force is consistently directed towards the top end where the product outlet is located.

Preferably, the pouch comprises side edges, each at opposite extremes of the gusset and extending in the longitudinal direction. This construction allows the gusseted base end to be the thickest part of the pouch (i.e. because the part of the cavity which is delimited by the gusseted base end holds a greater volume of frozen confection than the part of the cavity delimited by the top end of the wall. However, gripping and squeezing the pouch at its side edges is not desirable, since doing so directs the dispensing force both towards the top and base ends, and can lead to choking of the flow and residual frozen confection remaining in the base end. To dissuade the consumer from holding and squeezing the pouch by the side edges, it is preferred that at least one of the side edges comprises an indented portion, and more preferably that each side edge comprises an indented portion.

Preferably the wall has opposing front and rear faces which are sealed together at the top edge, and also at the side edges. The product outlet is preferably an aperture formed in the front face of the wall.

It has been found that consumers expect and prefer the extruded frozen confection to have a shape that is reminiscent of the shape associated with soft-serve ice cream sold from a shop or an ice cream van. Such a shape cues an association with a high-quality product. In contrast, an extruded frozen confection having an essentially cylindrical shape (e.g. as is the case if a simple circular orifice is provided as the outlet) or a substantially flat, ribbon-shape (e.g. as is typically the case if a section of the wall is torn off or torn open to provide the outlet) is unattractive to consumers, and is perceived as being an inferior quality product.

Therefore, the product outlet is an aperture that is shaped so as to be capable of forming the extruded frozen confection into a fluted shape. The fluting provides the surface of the product with an elegant appearance that has radial segments defined by ridges which radiate from the centre of the product stream out to the edge. The ridges are separated from one another by troughs. Such a segmented, fluted structure is visually appealing to the consumer. It also gives an attractive appearance when a topping is applied. For example, if a sauce is applied it runs into the troughs of the segments but the ridges are largely free from the sauce. If a topping is applied (e.g. chopped nuts, chocolate sprinkles, confectionery pieces, etc.), the topping will collect in the troughs

This type of fluted shape has previously been achieved by using rigid plastic spout with a star-shaped orifice. The examples of WO 2018/224328 use pouches having the shapes depicted in Figure 1 and Figure 3 of that document. Both of these pouches have a spout. However, the pouch of the present invention does not comprise a spout. Instead, the product outlet is an aperture formed in the top end of the wall. The inventors have found that an aperture cut into the flexible side wall is capable of forming the extruded frozen confection into a fluted shape. This has several advantages over the pouches of the prior art which comprise a spout. Firstly, pouches wherein the outlet is an aperture formed in the wall have a simplified structure, which allows for a reduction in the number of materials used to make the pouch, making it easier to recycle. Secondly, one of the drawbacks of the outlet being a spout is that plugs of ice cream tend to form in the spout. Such plugs require considerable force to dislodge, and make it difficult for the user to dispense the frozen confection in an convenient and consistent manner. By providing a pouch where the outlet is an aperture formed in the top end of the wall this drawback is avoided, and the frozen confection is much more easily and consistently dispensable by the user.

The pouch comprises a product outlet through which the frozen confection can be extruded from the cavity. As set out above, the pouch comprises a wall extending in a longitudinal direction from the base end to the top end. The product outlet is an aperture formed in the top end of the wall. Preferably the aperture is formed in the top half of the wall, the top third of the wall, the top quarter of the wall, or even the top fifth of the wall.

Preferably the product outlet is situated away from the top edge of the pouch. The positioning of the aperture is preferably such that it proximal to (but not touching) the top edge. This is thought to make the aperture less susceptible to tearing during extrusion of the frozen confection. For example, it is preferred that the distance between top edge of the pouch and the centre of the aperture is at least 10 mm, at least 12 mm, at least 14 mm, at least 16 mm, or at least 18 mm. The distance between the top edge of the pouch and the centre of the aperture is preferably no more than 80 mm, no more than 60 mm, or no more than 40 mm. For the avoidance of doubt, the distance between the top edge of the pouch and the centre of the aperture refers to the shortest such distance.

The product outlet can be provided anywhere across the width of the top end of the wall (where the width is measured in the transverse direction). For example, the product outlet can be provided in the centre of the top end of the wall (i.e. approximately equidistant between the side edges), or provided at or proximal to a corner of the top edge of the pouch. In order to encourage users to grip and squeeze the pouch at the gusseted base end rather than at its side edges, the product outlet is preferably provided at or proximal to a corner of the top edge of the pouch.

Preferably the product outlet is situated such that the distance between the centre of the aperture and the side edge of the pouch closest to the aperture is at least 10 mm, at least 12 mm, at least 14 mm, at least 16 mm, or at least 18 mm. The distance between the centre of the aperture and the side edge of the pouch closest to the aperture is preferably no more than 70 mm, no more than 50 mm, or no more than 30 mm. For the avoidance of doubt, the distance between the side edge of the pouch and the centre of the aperture refers to the shortest such distance between the aperture and the side edge closest to the aperture.

The product outlet is preferably a star-shaped aperture or an aperture having intersecting slits radiating from the centre thereof. Such apertures extrude the frozen confection in a stream having a substantially star-shaped cross section, thereby giving rise to the fluted shape of the extruded frozen confection.

The diameter D of the outlet is the maximum distance between extremities of the aperture. For a star-shaped aperture this will be the diameter of a hypothetical circle which the points of the star touch. For an aperture having intersecting slits this will be the length of the longest slit. In order to allow the frozen confection to be dispensed without requiring excessive dispensing force, the diameter D of the outlet is preferably at least 8 mm, at least 10 mm, or even at least 12 mm. If the diameter is too large, then it is more difficult for the user to control the dispensing of a portion of frozen confection, potentially leading to an excessively large amount being dispensed. Thus, the diameter D of the outlet is preferably no more than 30 mm, no more than 25 mm, or even no more than 20 mm.

Although not necessary, in certain embodiments the product outlet can be situated in a side gusset. The side gusset is preferably a folded section of the wall, for example, a folded portion of the front face which is adjacent to one of the side edges and the top edge of the pouch. Where present, the side gusset preferably comprises a first gusset panel and a second gusset panel separated by a central fold line. Preferably the first gusset panel is bounded by two sealed edges where it meets the rear face of the wall, and the second gusset panel is bounded by an outer fold line and a sealed edge where it meets the front face of the wall. Alternatively, the first gusset panel is bounded by two sealed edges where it meets the rear face of the wall, and the second gusset panel is also bounded by two sealed edges where it meets the front face of the wall.

When the product outlet is an aperture formed in the side gusset, the aperture is cut into the side gusset and is preferably situated where the first and second gusset panels meet at the central fold line (i.e. so that the aperture bisects the central fold line). The aperture is shaped so as to be capable of forming the extruded frozen confection into a fluted shape, for example the product outlet can be a star-shaped aperture or an aperture having intersecting slits radiating from the centre thereof. The positioning of the side gusset is preferably such that the aperture is proximal to a corner of the top edge. An advantage of this embodiment is that the aperture is sealed within the side gusset when a dispensing force is not being applied to the pouch. As such, the aperture can easily be sealed during storage of the pouch, e.g. by clipping the first and second gusset panels together.

The wall of the pouch is deformable such that deformation of the wall urges the frozen confection towards the outlet, thereby enabling at least a portion of the frozen confection to be extruded through the outlet. The wall of the pouch is sufficiently deformable to allow transmission of manual force applied to the wall to urge the frozen confection towards the outlet. The manual force is preferably applied by a hand or hands squeezing the wall of the pouch. Examples of suitable deformable materials include plastic film materials, including multi-layer laminated polymer film material. Preferred plastic materials are polymers such as polyethylene, polyethylene terephthalate, polypropylene, polyester, polyamide, and combinations thereof.

The force needed to dispense the frozen confection from the pouch by deformation of the deformable wall is readily attainable with hand pressure (i.e. by a hand or hands squeezing the wall of the pouch) where the volume of the pouch is not too large. As such, the cavity preferably has a volume of 100 ml to 600 ml. Preferably the cavity has a volume of up to 550 ml, up to 500 ml, or even up to 450 ml. Preferably the cavity has a volume of at least 150 ml, at least 200 ml, at least 250 ml, or even at least 300 ml.

The pouch preferably contains at least one serving of the frozen confection, and more preferably contains multiple servings of the frozen confection - for example two, three, four, or even five servings. As such, the cavity of the pouch preferably contains frozen confection having a mass of at least 50 g, at least 100 g, at least 150 g, or even at least 175 g. The cavity of the pouch preferably contains frozen confection having a mass of no more than 350 g, no more than 325 g, no more than 300 g, no more than 275 g, or even no more than 250 g.

In order to keep the frozen confection in its frozen state, the pouch is preferably stored in a freezer between dispensing occasions. It is preferred that the pouch is stored in a freezer at a temperature of less than -10°C, or even less than -12°C. Preferably the pouch is stored in a domestic freezer, for example at a temperature of -14°C to -25°C, or -16°C to -22°C.

As mentioned above, the wall of the pouch is sufficiently deformable to allow transmission of manual force applied to the wall to urge the frozen confection towards the outlet. The pouch thus allows effective dispensing of a range of frozen confections. As used herein the term frozen confection means a confection intended for consumption in the frozen state (i.e. where the temperature of the confection is less than 0°C, and preferably wherein the confection comprises significant amounts of ice). Examples of frozen confections include ice creams, frozen yoghurts, gelatos, and sherbets.

To aid dispensing, it is preferred that the frozen confection contained within the pouch is formulated to be soft and yet stable at a range of temperatures encountered in domestic freezers. Formulating the frozen confection accordingly allows the frozen confection to be conveniently dispensed in a controlled manner by manual force which is applied by a hand or hands squeezing the wall of the pouch.

The frozen confection of the present invention preferably comprises protein in an amount of from 0.5 wt% to 10 wt%, preferably in an amount of from 0.8 wt% to 8 wt%, or 1 wt% to 6 wt%. It is particularly preferred that the protein comprises milk protein, which can be conveniently provided in the form of skimmed milk powder (which typically comprises around 34 wt% milk protein - a combination of casein and whey proteins, as well as around 50 wt% lactose which contributes to the freezing point depressants in the formulation).

The amount of ice in the frozen confection is, to a large extent, determined by the amount and molecular weight of the freezing point depressants in the formulation. If the amount of ice is too high, then the frozen confection becomes difficult to extrude at low temperatures found in some domestic freezers. Thus, the frozen confection preferably comprises freezing point depressants in an amount of at least 20 wt%, and more preferably in amount of at least 23 wt%, at least 25 wt%, at least 27 wt% or even at least 28 wt%.

Freezing point depressants as defined in this invention consist of:

- monosaccharides and disaccharides;
- oligosaccharides formed from 3 to 10 monosaccharide monomers;
- corn syrups with a dextrose equivalent (DE) of 20 or more, preferably 40 or more, or 60 or more;
- sugar alcohols, preferably selected from: erythritol, arabitol, glycerol, xylitol, sorbitol, mannitol, lactitol maltitol, and mixtures thereof.

The average molecular weight for a mixture of freezing point depressants is defined by the number average molecular weight $<M>_n$ which can be calculated using the following equation:

$$< M >_n = \frac{\sum w_i}{\sum (w_i / M_i)} = \frac{\sum N_i M_i}{\sum N_i}$$

where $w_i$ is the mass of species i, $M_i$ is the molar mass of species i and $N_i$ is the number of moles of species i of molar mass $M_i$.

As mentioned above, the freezing point depressants may comprise certain corn syrups. Corn syrups are complex multi-component sugar mixtures and dextrose equivalent (DE) is a common means of classification. As set out in Chirife et al. (J. Food Eng. 1997 33: 221-226), the number average molecular weight $<M>_n$ of corn syrups can be calculated using the following equation:

$$< M >_n = \frac{18016}{DE}$$

In order to provide a frozen confection which is extrudable at low temperatures - even when squeezed by hand, the number average molecular weight $<M>_n$ of the freezing point depressants in the frozen confection is preferably no more than 275 g mol$^{-1}$. Preferably the number average molecular weight $<M>_n$ of the freezing point depressants in the frozen confection is no more than 260 g mol$^{-1}$, no more than 245 g mol$^{-1}$, or even no more than 230 g mol$^{-1}$.

If the amount of freezing point depressants becomes too high and/or their molecular weight becomes too low, then the rheology of the frozen confection will become too fluid at higher temperatures such as those that may be encountered in the frozen supply chain. Increased fluidity is considered problematic since it is associated with loss of microstructure. Thus, the frozen confection preferably comprises freezing point depressants in an amount of no more than 40 wt%, and preferably in amount of up to 38 wt%, up to 36 wt%, up to 34 wt% or even up to 32 wt%.

In addition, the number average molecular weight $<M>_n$ of the freezing point depressants in the frozen confection is preferably at least 200 g mol$^{-1}$. More preferably the number average molecular weight $<M>_n$ of the freezing point depressants in the frozen confection is at least 202 g mol$^{-1}$, at least 204 g mol$^{-1}$, or even at least 206 g mol$^{-1}$.

It is preferred that the freezing point depressants are predominantly saccharides (i.e. monosaccharides, disaccharides and oligosaccharides). This will include corn syrups, insofar as these are a mixture of monosaccharides, disaccharides and oligosaccharides. In particular, it is preferred that at least 90% by weight of the freezing point depressants are monosaccharides, disaccharides and oligosaccharides, for example at least 92% by weight, at least 95% by weight or even 97% to 100% by weight.

The freezing point depressants preferably comprise erythritol. Erythritol is particularly effective at imparting desirable rheological properties to the frozen confection. In addition, erythritol does not impart an unpleasant off-taste, is not overly sweet, and does not normally cause laxative effects and bloating, as are often experienced after consumption of other sugar alcohols. Preferably the frozen confection comprises erythritol in an amount of at least 0.25 wt%, at least 0.5 wt%, at least 0.7 wt%, or even at least 1 wt%. Preferably the frozen confection comprises erythritol in an amount of no more than 5 wt%, no more than 4 wt%, no more than 3.5 wt%, or even no more than 3 wt%.

The frozen confection preferably comprises fat in an amount of 1 wt% to 15 wt%, from 4 wt% to 12 wt%, or even from 5 wt% to 10 wt%. The fat is preferably milk fat or vegetable fat (such as coconut oil, palm oil, palm kernel oil, or a mixture thereof). For example, the fat may comprise milk fat, coconut oil, or a mixture thereof. It is particularly preferred that the fat is coconut oil.

The frozen confection preferably comprises an emulsifier or a mixture of emulsifiers. For example, the frozen confection may comprise emulsifier(s) in an amount of 0.05 wt% to 1 wt%, 0.1 wt% to 0.8 wt%, or 0.15 wt% to 0.6 wt%.

The frozen confection is preferably aerated. As used herein the term "aerated" means that the confection has an overrun of at least 30%. Preferably the frozen confection has an overrun of 50% to 150%, 70% to 140%, or even 80% to 120%. Overrun (with unit "%") is defined by the following equation:

$$overrun = \frac{\text{volume of aerated product - volume of initial mix}}{\text{Volume of initial mix}} \times 100\%$$

Overrun is measured at ambient temperature (20°C) and atmospheric pressure.

Unless otherwise specified, numerical ranges expressed in the format "from x to y" are understood to include x and y. In specifying any range of values or amounts, any particular upper value or amount can be associated with any particular lower value or amount. Except in the examples and comparative experiments, or where otherwise explicitly indicated, all numbers are to be understood as modified by the word "about".

Definitions and descriptions of various terms and techniques used in frozen confection manufacture are found in Ice Cream by H. Douglas Goff and Richard W. Hartel (2013, 7th Edition, Kluwer Academic/Plenum Publishers). All percentages and ratios contained herein are calculated by weight (unless otherwise indicated), with the exception of percentages cited in relation to overrun.

As used herein, the indefinite article "a" or "an" and its corresponding definite article "the" means at least one, or one or more, unless specified otherwise.

The invention is not limited to the embodiments illustrated in the drawings. Accordingly it should be understood that where features mentioned in the claims are followed by reference numerals, such numerals are included solely for the purpose of enhancing the intelligibility of the claims and are in no way limiting to the scope of the claims.

**Figures**

By way of example, the present invention is illustrated with reference to the following figures, in which:

Figure 1 shows several views of a pouch containing frozen confection according to the invention. Specifically, Figure 1a is a front view of the pouch, Figure 1b is a bottom view of the pouch, Figure 1c is a side view of the pouch, and Figure 1d is a cross-sectional view of the pouch viewed from the side.
Figures 2a to 2d show front views of further pouches according to the invention.
Figure 3 shows a front view of a pouch with a removeable closure.
Figures 4a and 4b show front and side views of an embodiment of a pouch containing frozen confection according to the invention.
Figure 5 is a photograph of ice creams which were extruded from a pouch according to the invention.

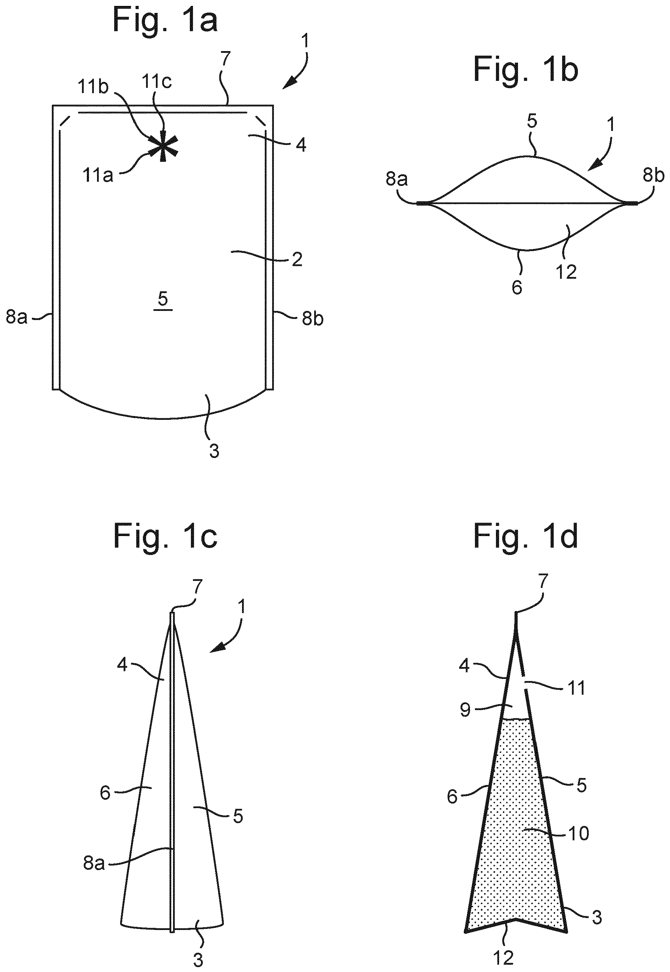

Figure 1 shows a pouch (**1**) containing frozen confection. As can be seen from Figure 1a, the pouch comprises a wall (**2**) which extends in a longitudinal direction from a base end (**3**) to a top end (**4**). The wall (**2**) has opposing front (**5**) and rear (**6**) faces which have been sealed together at a top edge (**7**), and also at side edges (**8a**, **8b**). The wall (**2**) is made of a deformable material, such as plastic film material. As shown in the cross-sectional view of Figure 1d, the wall (**2**) delimits a cavity (**9**) containing the frozen confection (**10**). It will be apparent that the gusseted base end (**3**) is the thickest part of the pouch (**1**), and that the thickness of the filled pouch tapers in the longitudinal direction.

The pouch comprises a product outlet through which the frozen confection (**10**) can be extruded from the cavity (**9**). The product outlet is an aperture (**11**) formed in the top end (**4**) of the wall (**2**). The positioning of the aperture is such that it proximal to the top edge (**7**), although the aperture does not touch the top edge (**7**). The aperture (**11**) is shaped so as to be capable of forming the extruded frozen confection into a fluted shape. In this instance, the aperture consists of three intersecting slits (**11a**, **11b**, **11c**) formed in the top end (**4**) of the front face (**5**) (Figure 1a).

The base end (**3**) comprises a gusset (**12**) extending in a transverse direction. The gusset (**12**) is folded inwards. As best seen in Figures 1b and 1d, the gusset (**12**) is on the underside of the base end (**3**), and its presence allows the pouch (**1**) to be self-standing on a flat surface. The part of the cavity at the gusseted base end (**3**) holds a greater volume of frozen confection than the part of the cavity at to the top end (**4**) (Figure 1d).

The product outlet can be provided anywhere across the width of the top end of the wall (where the width is measured in the transverse direction). In the embodiment shown in Figure 1, the aperture (**11**) is situated in the centre of the top end (**4**), i.e. approximately equidistant from the side edges (**8a**, **8b**).

For example, the product outlet can be provided in the centre of the top end of the wall (i.e. approximately equidistant between the side edges), or provided at or proximal to a corner of the top edge of the pouch. In order to encourage users to grip and squeeze the pouch at the gusseted base end rather than at its side edges, the product outlet is preferably provided at or proximal to a corner of the top edge of the pouch.

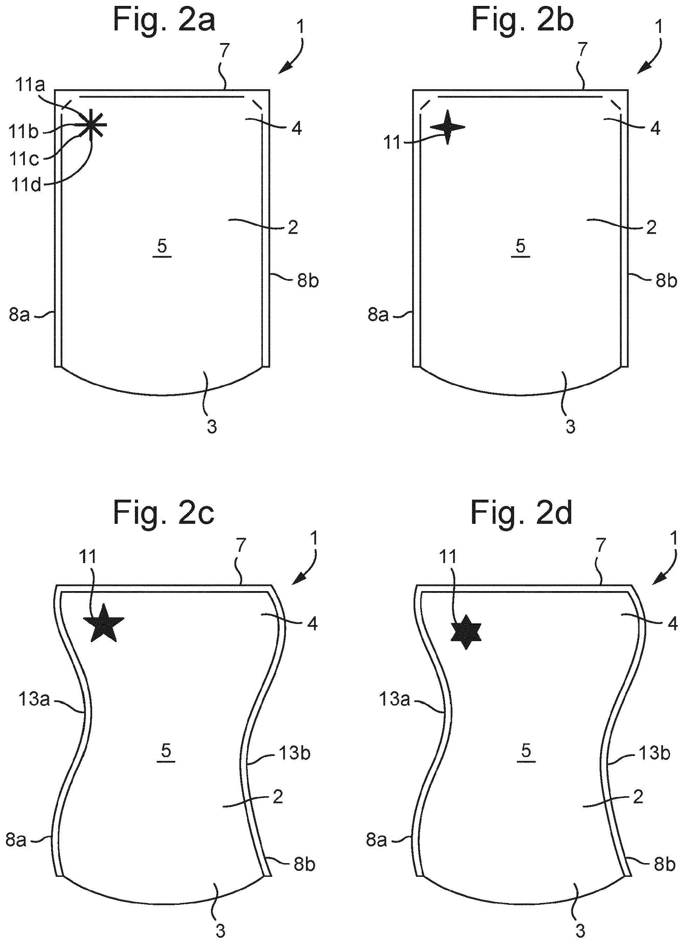

Figure 2 shows further examples of pouches (**1**) containing frozen confection. Figures 2a and 2b show pouches which are the same as that shown in Figure 1, except for the product outlet through which the frozen confection can be extruded from the cavity.

The product outlet of the pouch shown in Figure 2a is an aperture (**11**) in the top end (**4**) of the wall (**2**). The aperture (**11**) is shaped so as to be capable of forming the extruded frozen confection into a fluted shape. In this instance, the aperture consists of four intersecting slits (**11a**, **11b**, **11c**, **11d**) formed in the top end (**4**) of the front face (**5**). The aperture is proximal to a corner of the top edge (**7**), i.e. closer to side edge (**8a**) than side edge (**8b**).

Whilst not shown, it will be appreciated that an aperture consisting of four intersecting slits (**11a**, **11b**, **11c**, **11d**) formed in the top end (**4**) of the front face (**5**) could alternatively be positioned in the centre of the top end (**4**), i.e.

approximately equidistant from the side edges (**8a**, **8b**).

The product outlet of the pouch shown in Figure 2b is a star-shaped aperture (**11**) formed in the top end (**4**) of the wall (**2**); specifically the aperture (**11**) has the shape of a four-pointed star. Such a star-shaped aperture (**11**) can easily be cut into the wall (**2**) during manufacture of the pouch (**1**), for example into the front face (**5**). Like the pouch of Figure 2a, the aperture of the pouch shown in Figure 2b is proximal to a corner of the top edge (**7**), i.e. closer to side edge (**8a**) than side edge (**8b**).

Figure 2c shows another version of a pouch (**1**) containing frozen confection. The pouch comprises a wall (**2**) which extends in a longitudinal direction from a base end (**3**) to a top end (**4**). The wall (**2**) is made of a deformable material, and delimits a cavity containing the frozen confection. The wall (**2**) has opposing front (**5**) and rear (**6**) faces which have been sealed together at a top edge (**7**), and also at side edges (**8a**, **8b**).

The pouch comprises a product outlet through which the frozen confection can be extruded from the cavity. The product outlet is an aperture (**11**) formed in the top end (**4**) of the wall (**2**). In this instance the aperture is proximal to a corner of the top edge (**7**), i.e. closer to side edge (**8a**) than side edge (**8b**). The aperture (**11**) is shaped so as to be capable of forming the extruded frozen confection into a fluted shape. The pouch of Figure 2c has a star-shaped aperture (**11**) formed in the in the top end (**4**) of the front face (**5**); specifically the aperture (**11**) has the shape of a five-pointed star.

Although not visible in Figure 2c, the base end (**3**) of the pouch (**1**) comprises a gusset extending in a transverse direction. The bottom view of this pouch is very similar to that shown in Figure 1b.

Each of the side edges (**8a**, **8b**) comprises an indented portion (**13a**, **13b**); each of the indented portions (**13a**, **13b**) being approximately midway between the base end (**3**) and the top end (**4**). The presence of the indented portions (**13a**, **13b**) makes it awkward for a user to grip and squeeze the pouch by the side edges (**8a**, **8b**), and so encourages the user to squeeze the pouch at the base end (3) thereby directing the dispensing force towards the top end (**4**) and the product outlet.

Figure 2d shows yet another version of a pouch (**1**) containing frozen confection. The pouch shown in Figure 2d is identical to that shown in Figure 2c, except for the shape of the product outlet. The product outlet of the pouch shown in Figure 2d is a star-shaped aperture (**11**) formed in the in the top end (**4**) of the front face (**5**); specifically the aperture (**11**) has the shape of a six-pointed star. Once again, the aperture (**11**) of the pouch shown in Figure 2d is proximal to a corner of the top end (**7**), i.e. closer to side edge (**8a**) than side edge (**8b**).

It will be appreciated that a star-shaped aperture formed in the top end (**4**) of the wall (**2**) (e.g. a four-pointed, five-pointed, or six-pointed star) can be provided anywhere across the width of the top end of the wall (where the width is measured in the transverse direction). For example, such a star-shaped aperture could alternatively be positioned in the centre of the top end (**4**), i.e. approximately equidistant from the side edges (**8a**, **8b**). Similarly, the shape of the side edges of the pouch is independent of the aperture shape. Any of the apertures (**11**) shown in Figures 1a, 2a, or 2b could be used with the pouch shape of Figures 2c and 2d. Similarly, either of the apertures (**11**) of Figures 2c and 2d could be used with the pouch shape of Figures 1, 2a, or 2b.

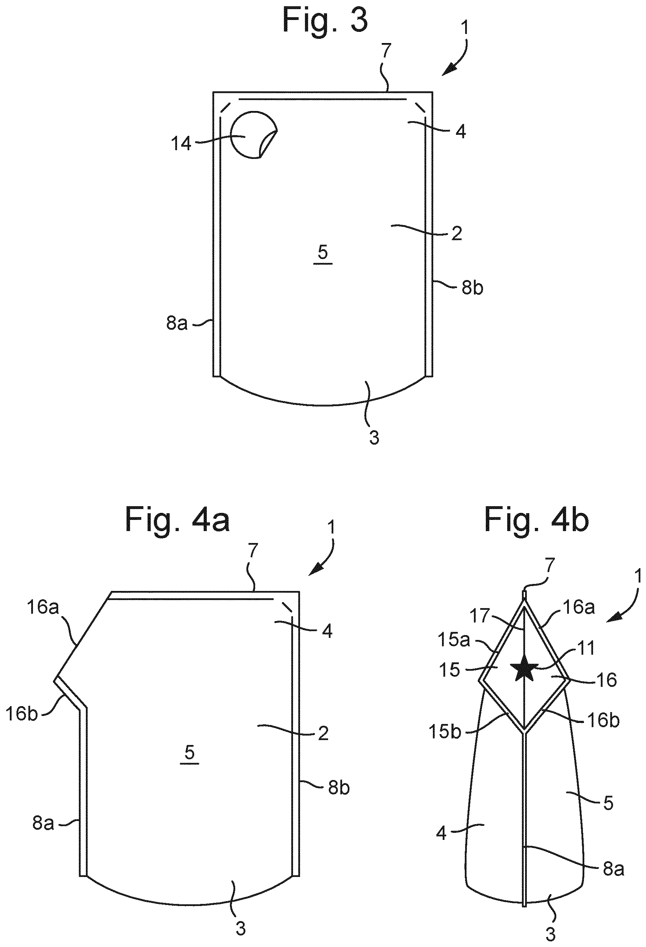

For hygiene reasons, it is preferred that the outlet of the pouch is sealed during storage. Figure 3 shows the pouch of Figures 2a and 2b with a removeable closure (**14**) covering the aperture - which in this instance is a peelable sticker. The user can simply remove this closure (**14**) before serving the frozen confection.

Figure 4 shows another version of a pouch (**1**) containing frozen confection. The pouch comprises a wall (**2**) which extends in a longitudinal direction from a base end (**3**) to a top end (**4**). The wall (**2**) has opposing front (**5**) and rear (**6**) faces which have been sealed together at a top edge (**7**), and also at side edges (**8a**, **8b**). The wall (**2**) is made of a deformable material, such as plastic film material. The wall (**2**) delimits a cavity containing the frozen confection. The base end (**3**) comprises a gusset (**12**) extending in a transverse direction. The gusset (**12**) is folded inwards, and allows the filled pouch to be self-standing on a flat surface. The bottom view of the pouch of Figure 4 is similar to that shown in Figure 1b. The gusseted base end (**3**) is the thickest part of the pouch (**1**), and that the thickness of the filled pouch tapers in the longitudinal direction. The part of the cavity at the gusseted base end (**3**) holds a greater volume of frozen confection than the part of the cavity at to the top end (**4**).

The pouch comprises a product outlet through which frozen confection can be extruded from the cavity. The product outlet is situated in a side gusset. The side gusset is a folded section of the wall (**2**), specifically, a folded portion of front face (**5**) which is adjacent to a side edge (**8a**) and the top edge (**7**) of the pouch. The side gusset comprises a first gusset panel (**15**) and a second gusset panel (**16**) separated by a central fold line (**17**). The first gusset panel (**15**) is bounded by two sealed edges (**15a**, **15b**) where it meets the rear face (**6**) of the wall (**2**). The second gusset panel (**16**) is bounded by an outer fold line (**16a**) and a sealed edge (**16b**) where it meets the front face (**5**) of the wall (**2**).

The product outlet is an aperture (**11**) formed in the side gusset. As can be seen from Figure 4b, the aperture (**11**) is cut into the side gusset and situated where the first and second gusset panels (**15**, **16**) meet at the central fold line (**17**). The aperture (**11**) is shaped so as to be capable of forming the extruded frozen confection into a fluted shape. In this instance the outlet is a star-shaped aperture (**11**) having the shape of a five-pointed star. As can be appreciated from Figure 4a, the positioning of the side gusset is such that the aperture is proximal to a corner of the top edge (**7**). An advantage of this embodiment is that the aperture (**11**) is sealed within the side gusset when a dispensing force is not being applied to the pouch. As such, the aperture can easily be sealed during storage of the pouch, e.g. by clipping the first and second gusset panels (**15**, **16**) together.

## Examples

The following examples are intended to illustrate the invention and are not intended to limit the invention to those examples *per se.*

Example 1

Ice cream was made according to the formulation in Table 1.

Table 1: ice cream formulation

| Ingredient | Amount (wt%) |
|---|---|
| Coconut oil | 8.0 |
| Skimmed milk powder (SMP) | 6.8 |
| Dextrose monohydrate | 13.0 |
| Corn syrup (DE63, 78% solids) | 15.5 |
| Erythritol | 3.0 |
| Emulsifier | 0.4 |
| Stabiliser | 0.27 |
| Vanilla flavour | 0.28 |
| Colour | 0.01 |
| Water | to 100 |
| Freezing point depressants | 30.3 |
| $<M>_n$ (g mol$^{-1}$) | 213 |
| Total protein | 2.31 |

Briefly, the ingredients (excluding coconut oil) were combined and mixed with heating (60°C to 75°C), followed by addition of the coconut oil and further mixing. The mixes were pasteurised and homogenised. The mixes were aged overnight at 4°C and aerated in a scraped surface heat exchanger (standard ice cream freezer). The air input was controlled to give a target overrun of 100%, and freezing was controlled to give a target extrusion temperature of -10°C.

The frozen mixes were filled directly into pouches with flexible walls having a volume of 400 ml. The pouch wall was made of food-grade plastic. Pouch 1 was as illustrated in Figure 1, with an outlet was an aperture consisting of 3 intersecting slits formed in the top end of the front face. The length of each of the slits (and hence the diameter D) was xx mm. Pouch 2 was the same as pouch 1, except that the that the outlet was an aperture with the shape of a six-pointed star cut into the front face of the pouch and having a diameter **D** of 18 mm. Approximately 210 g of ice cream was filled into each pouch through the top end, which was then heat sealed to form the top edge. The frozen product was hardened by placing the pouches in a blast freezer.

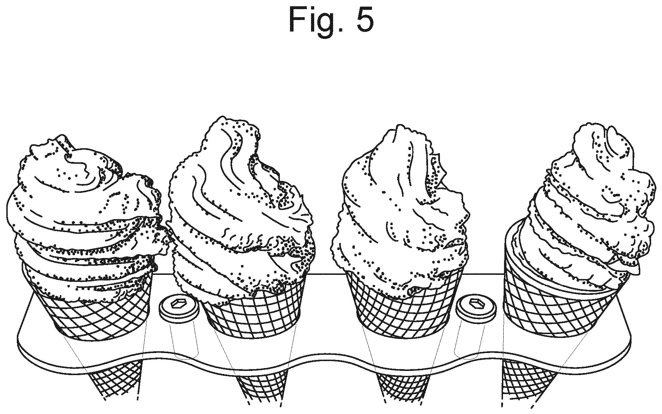

The pouches were transferred to a domestic freezer (-18°C) for several days before use. When the pouches were removed from the freezer, they were found to be convenient to handle, with the arrangement of the pouches allowing almost complete dispensing of the contents by a user. The extruded product was found to have an attractive fluted shape. This is shown by Figure 5, which is a photograph of the ice cream extruded from pouch 2 (i.e. with a star-shaped aperture).

## Claims

1. A pouch (1) containing frozen confection (10), wherein the pouch comprises:

   - a wall (2) delimiting a cavity (9) containing the frozen confection and extending in a longitudinal direction from a base end (3) to a top end (4) of the pouch, wherein the base end comprises a gusset (12) extending in a transverse direction, and the top end comprises a top edge (7) extending in the transverse direction; and

- a product outlet (11) through which the frozen confection can be extruded from the cavity (9), the product outlet being an aperture in the top end of the wall,

wherein the wall is deformable such that deformation of the wall urges the frozen confection towards the outlet enabling at least a portion of the frozen confection to be extruded through the outlet; and
wherein the product outlet is an aperture that is shaped so as to be capable of forming the extruded frozen confection into a fluted shape, wherein the product outlet is a star-shaped aperture or an aperture having intersecting slits radiating from the centre thereof, and
wherein the pouch does not comprise a spout.

2. A pouch containing frozen confection as claimed in claim 1, wherein the pouch comprises side edges (8a, 8b), each at opposite extremes of the gusseted base end and extending in a longitudinal direction.

3. A pouch as claimed in claim 2, wherein at least one of the side edges comprises an indented portion (13a, 13b).

4. A pouch containing frozen confection as claimed in claim 2 or claim 3, wherein the wall has opposing front (5) and rear (6) faces which are sealed together at the top edge, and also at the side edges.

5. A pouch containing frozen confection as claimed in any one of claims 1 to 4, wherein the product outlet is disposed at or proximal to a corner of the top edge.

6. A pouch containing frozen confection as claimed in any one of claims 1 to 5, wherein the outlet has a diameter $D$ of 8 mm to 30 mm.

7. A pouch containing frozen confection as claimed in any one of claims 1 to 6, wherein the aperture is formed in the top third of the wall.

8. A pouch containing frozen confection as claimed in any one of claims 1 to 7, wherein the outlet of the pouch is sealed with a removable closure.

9. A pouch containing frozen confection as claimed in any one of claims 1 to 8, wherein the cavity has a volume of 100 ml to 600 ml.

10. A pouch containing frozen confection as claimed in any one of claims 1 to 9, wherein the wall is formed from a plastic film material.

11. A pouch containing frozen confection as claimed in any one of claims 1 to 10, wherein the pouch contains frozen confection having a mass of 100 g to 350 g.

12. A pouch containing frozen confection as claimed in any one of claims 1 to 11, wherein the product outlet is situated in a side gusset.

13. A pouch as claimed in any one of claims 1 to 12, wherein the frozen confection comprises freezing point depressants in an amount of 20 wt% to 40 wt%, wherein the number average molecular weight $<M>_n$ of the freezing point depressants is 200 g mol$^{-1}$ to 275 g mol$^{-1}$.

14. A pouch as claimed in claim 13, wherein the freezing point depressants comprise erythritol.

**Patentansprüche**

1. Beutel (1), der gefrorenes Konfekt (10) enthält, wobei der Beutel Folgendes umfasst:

- eine Wand (2), die einen Hohlraum (9) begrenzt, der das gefrorene Konfekt enthält, und sich in einer Längsrichtung von einem Basisende (3) zu einem oberen Ende (4) des Beutels erstreckt, wobei das Basisende eine Verstärkung (12) umfasst, die in Querrichtung verläuft, und das obere Ende eine obere Kante (7) umfasst, die in Querrichtung verläuft; und
- einen Produktauslass (11), durch den das gefrorene Konfekt aus dem Hohlraum (9) extrudiert werden kann, wobei der Produktauslass eine Öffnung im oberen Ende der Wand ist,

wobei die Wand verformt werden kann, so dass eine Verformung der Wand das gefrorene Konfekt in Richtung des Auslasses drängt, um zu ermöglichen, dass wenigstens ein Teil des gefrorenen Konfekts durch den Auslass extrudiert werden kann; und

wobei der Produktauslass eine Öffnung ist, die so geformt ist, dass sie das extrudierte gefrorene Konfekt in eine geriffelte Form formen kann, wobei der Produktauslass eine sternförmige Öffnung ist oder eine Öffnung ist, die sich schneidende Schlitze hat, die von der Mitte aus radial verlaufen, und wobei der Beutel keine Tülle umfasst.

2.  Beutel, der gefrorenes Konfekt enthält, nach Anspruch 1, wobei der Beutel Seitenkanten (8a, 8b) umfasst, die sich jeweils an gegenüberliegenden äußersten Enden des verstärkten Basisendes befinden und in Längsrichtung verlaufen.

3.  Beutel nach Anspruch 2, wobei wenigstens eine der Seitenkanten einen eingekerbten Abschnitt (13a, 13b) umfasst.

4.  Beutel, der gefrorenes Konfekt enthält, nach Anspruch 2 oder Anspruch 3, wobei die Wand eine Vorderseite (5) und eine Rückseite (6), die einander gegenüberliegen, aufweist, die an der oberen Kante und außerdem an den Seitenkanten miteinander abgedichtet sind.

5.  Beutel, der gefrorenes Konfekt enthält, nach einem der Ansprüche 1 bis 4, wobei der Produktauslass an einer Ecke der oberen Kante oder direkt daran angeordnet ist.

6.  Beutel, der gefrorenes Konfekt enthält, nach einem der Ansprüche 1 bis 5, wobei der Auslass einen Durchmesser D von 8 mm bis 30 mm aufweist.

7.  Beutel, der gefrorenes Konfekt enthält, nach einem der Ansprüche 1 bis 6, wobei die Öffnung im oberen Drittel der Wand ausgebildet ist.

8.  Beutel, der gefrorenes Konfekt enthält, nach einem der Ansprüche 1 bis 7, wobei der Auslass des Beutels mit einem abnehmbaren Verschluss abgedichtet ist.

9.  Beutel, der gefrorenes Konfekt enthält, nach einem der Ansprüche 1 bis 8, wobei der Hohlraum ein Volumen von 100 ml bis 600 ml aufweist.

10. Beutel, der gefrorenes Konfekt enthält, nach einem der Ansprüche 1 bis 9, wobei die Wand aus einem Kunststofffolienmaterial gebildet ist.

11. Beutel, der gefrorenes Konfekt enthält, nach einem der Ansprüche 1 bis 10, wobei der Beutel gefrorenes Konfekt enthält, das eine Masse von 100 g bis 350 g hat.

12. Beutel, der gefrorenes Konfekt enthält, nach einem der Ansprüche 1 bis 11, wobei sich der Produktauslass in einer seitlichen Verstärkung befindet.

13. Beutel nach einem der Ansprüche 1 bis 12, wobei das gefrorene Konfekt Mittel zur Gefrierpunktserniedrigung in einer Menge von 20 Gew.-% bis 40 Gew.-% umfasst, wobei das mittlere Molekulargewicht $<M>_n$ der Mittel zur Gefrier-punktserniedrigung 200 g mol$^{-1}$ bis 275 g mol$^{-1}$ beträgt.

14. Beutel nach Anspruch 13, wobei die Mittel zur Gefrierpunktserniedrigung Erythrit umfassen.

**Revendications**

1.  Sachet (1) contenant une confiserie glacée (10), où le sachet comprend :

- une paroi (2) délimitant une cavité (9) contenant la confiserie glacée et s'étendant dans une direction longitudinale d'une extrémité de base (3) à une extrémité supérieure (4) du sachet, où l'extrémité de base comprend un soufflet (12) s'étendant dans une direction transversale, et la partie supérieure comprend un bord supérieur (7) s'étendant dans la direction transversale; et
- une sortie de produit (11) par laquelle la confiserie glacée peut être extrudée hors de la cavité (9), la sortie de produit étant une ouverture dans l'extrémité supérieure de la paroi,

où la paroi est déformable de sorte qu'une déformation de la paroi pousse la confiserie glacée vers la sortie, permettant l'extrusion d'au moins une partie de la confiserie glacée par la sortie; et
où la sortie de produit est une ouverture qui est façonnée de manière à être capable de mettre la confiserie glacée extrudée sous une forme cannelée, où la sortie de produit est une ouverture en forme d'étoile ou une ouverture ayant des fentes entrecroisées rayonnant depuis son centre, et
où le sachet ne comprend pas de bec verseur.

2. Sachet contenant une confiserie glacée selon la revendication 1, où le sachet comprend des bords latéraux (8a, 8b), chacun à des extrêmes opposés de l'extrémité de base à soufflet et s'étendant dans une direction longitudinale.

3. Sachet selon la revendication 2, où au moins l'un des bords latéraux comprend une partie dentelée (13a, 13b).

4. Sachet contenant une confiserie glacée selon la revendication 2 ou la revendication 3, où la paroi a des faces avant (5) et arrière (6) opposées, qui sont scellées ensemble au niveau du bord supérieur, et aussi au niveau des bords latéraux.

5. Sachet contenant une confiserie glacée selon l'une quelconque des revendications 1 à 4, où la sortie de produit est disposée au niveau ou à proximité d'un coin du bord supérieur.

6. Sachet contenant une confiserie glacée selon l'une quelconque des revendications 1 à 5, où la sortie a un diamètre D de 8 à 30 mm.

7. Sachet contenant une confiserie glacée selon l'une quelconque des revendications 1 à 6, où l'ouverture est formée dans le tiers supérieur de la paroi.

8. Sachet contenant une confiserie glacée selon l'une quelconque des revendications 1 à 7, où la sortie du sachet est scellée avec une fermeture amovible.

9. Sachet contenant une confiserie glacée selon l'une quelconque des revendications 1 à 8, où la cavité a un volume de 100 ml à 600 ml.

10. Sachet contenant une confiserie glacée selon l'une quelconque des revendications 1 à 9, où la paroi est formée à partir d'un matériau en film plastique.

11. Sachet contenant une confiserie glacée selon l'une quelconque des revendications 1 à 10, où le sachet contient une confiserie glacée ayant une masse de 100 g à 350 g.

12. Sachet contenant une confiserie glacée selon l'une quelconque des revendications 1 à 11, où la sortie de produit est située dans un soufflet latéral.

13. Sachet selon l'une quelconque des revendications 1 à 12, où la confiserie glacée comprend des abaisseurs de point de congélation en une quantité de 20 % en poids à 40 % en poids, où la masse moléculaire moyenne en nombre $\langle M \rangle_n$ des abaisseurs de point de congélation est de 200 g mol$^{-1}$ à 275 g mol$^{-1}$.

14. Sachet selon la revendication 13, où les abaisseurs de point de congélation comprennent de l'érythritol.

Fig. 1a

Fig. 1b

Fig. 1c

Fig. 1d

# Fig. 2a

# Fig. 2b

# Fig. 2c

# Fig. 2d

# Fig. 3

# Fig. 4a

# Fig. 4b

# Fig. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018224328 A1

- WO 2018224328 A

**Non-patent literature cited in the description**

- **CHIRIFE et al.** *J. Food Eng.*, 1997, vol. 33, 221-226